# EUROPEAN PATENT APPLICATION

(11) **EP 2 355 618 A1**
(43) Date of publication of application: **10.08.2011**
(21) Application number: 10152198.7
(22) Date of filing: 29.01.2010
(51) Int. Cl.: H05B 33/08

(54) **Brightness adjusting circuit for an led lamp**

(71) Applicant: Lin, Chiu-Min, Taoyuan County (TW)
(72) Inventor: Lin, Chiu-Min, Taoyuan County (TW)
(74) Representative: Lang, Christian

(57) **Abstract**

A brightness adjusting circuit for an LED lamp (1) has a compensating circuit (10), a bridge rectifier (20), a filter capacitor (30) and a current limiting circuit (40). The compensating circuit (11) is connected between an output terminal of a light regulator (102) and an AC wire to output a regulated input voltage. The bridge rectifier (20) is connected to the compensating circuit (10) and converts the regulated input voltage to a DC voltage. The filter capacitor (30) is connected to the bridge rectifier (20). The current limiting resistor (40) is connected between the bridge rectifier (20) and the LED lamp (1) to limit a current flowing through the LED lamp (1). When the light regulator (102) is adjusted, the regulated input voltage across the compensating circuit (11) is changed accordingly. Therefore, the DC voltage is varied to regulate the brightness of the LED lamp (1).

## Description

### 1. Field of the Invention

The present invention relates to a brightness adjusting circuit for a Light-emitting diode (LED) lamp, especially to a brightness adjusting circuit that allows a light regulator to control the brightness of the LED lamp.

### 2. Description of the Related Art

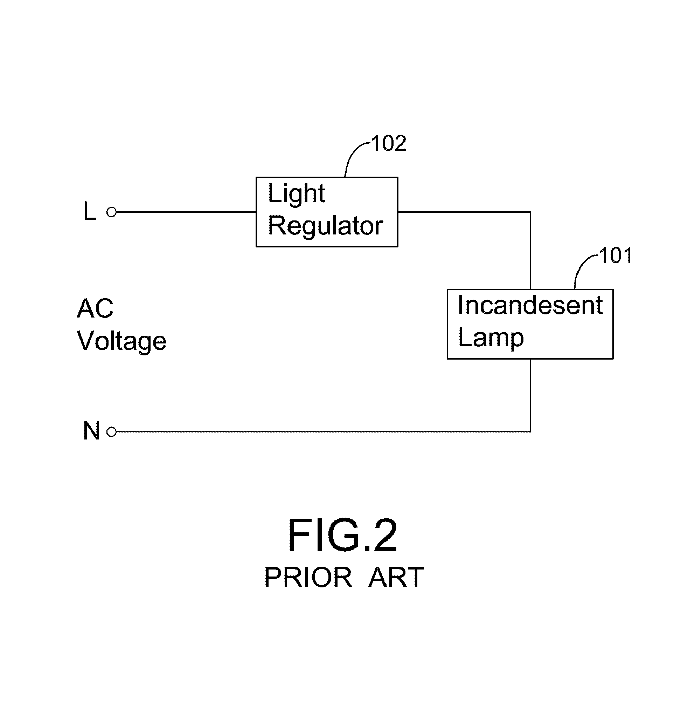

Light adjustable lamps are often used to provide comfortable ambiance. With reference to Fig. 2, a conventional light adjustable lamp mainly includes an incandescent lamp 101 and a light regulator 102 connected in series. The light regulator 102 is composed of silicon-controlled elements such as DIAC (diode for alternating current) and TRIAC (triode for alternating current). By changing a trigging voltage applied to the silicon-controlled element, the conduction angle of the silicon-controlled element is adjusted to control the AC voltage across the incandescent lamp 101 and accordingly regulate the brightness of the incandescent lamp 101 to a desired level.

More and more LED-based lamps are used as lighting equipment and are replacing conventional incandescent lamps for saving energy and reducing power consumption. The LED-based lamps are driven by low DC voltages. However, the light regulator 102 is unable to directly regulate the DC voltage and cannot adjust the brightness of the LED-based lamps. Therefore, users have to use particular regulators to substitute the existed light regulators and almost abandon all original related control circuits.

To overcome the shortcomings, the present invention provides a brightness adjusting circuit for an LED lamp to mitigate or obviate the aforementioned problems.

The main objective of the invention is to provide a brightness adjusting circuit for an LED lamp, wherein the brightness adjusting circuit allows an original light regulator to control the brightness of the LED lamp.

To achieve the objective, the brightness adjusting circuit for an LED lamp has a compensating circuit, a bridge rectifier, a filter capacitor and a current limiting circuit. The compensating circuit is connected between an output terminal of a light regulator and an AC wire to output a regulated input voltage. The bridge rectifier is connected to the compensating circuit and converts the regulated input voltage to a DC voltage. The filter capacitor is connected to the bridge rectifier. The current limiting resistor is connected between the bridge rectifier and the LED lamp to limit a current flowing through the LED lamp. When the light regulator is adjusted, the regulated input voltage across the compensating circuit is changed accordingly. Therefore, the DC voltage produced by the bridge rectifier is varied to regulate the brightness of the LED lamp.

Other objectives, advantages and novel features of the invention will become more apparent from the following detailed description when taken in conjunction with the accompanying drawings.

In the drawings:
Fig. 1 is a circuit diagram of a brightness adjusting circuit for an LED lamp in accordance with the present invention; and
Fig. 2 is a block circuit diagram of a conventional light adjustable lamp.

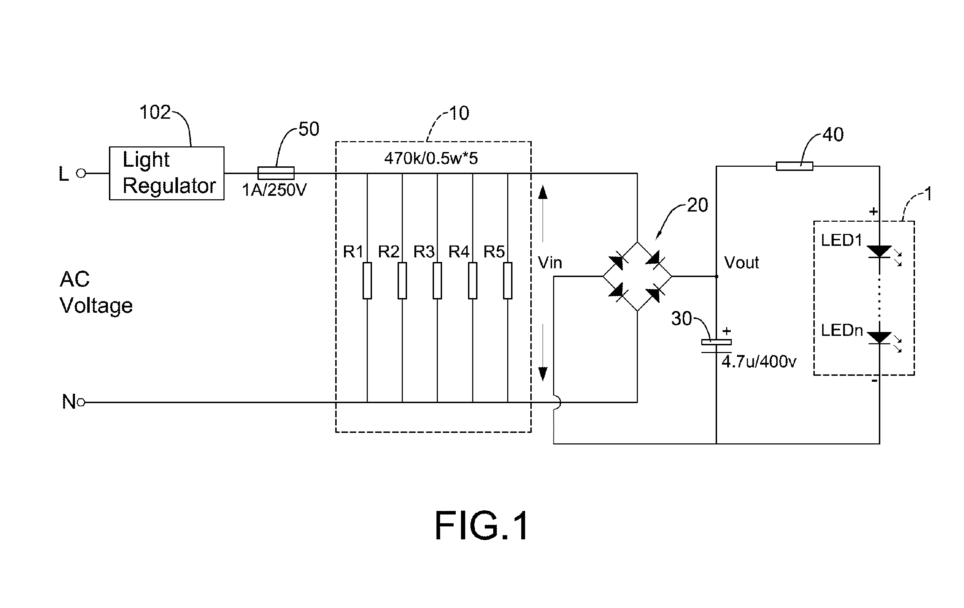

With reference to Fig. 1, a brightness adjusting circuit for an LED lamp 1 in accordance with the present invention is operated with a light regulator 102 and comprises a compensating circuit 10, a bridge rectifier 20, a filter capacitor 30 and a current limiting resistor 40 and may further have a fuse 50.

The light regulator 102 is connected to a first AC wire L and has an output terminal. The light regulator 102 comprises silicon-controlled elements such as a DIAC (diode for alternating current) and a TRIAC (triode for alternating current). The LED lamp 1 has a positive terminal and a negative terminal and comprises multiple LEDs connected in series.

The compensating circuit 10 is connected between the output terminal of the light regulator 102 and a second AC wire N, and comprises multiple resistors R1∼R5 connected in parallel. Preferably, all resistors R1∼R5 have the same resistance value. A regulated input voltage Vin is established across the compensating circuit 10.

The bridge rectifier 20 has a first input terminal, a second input terminal, a positive output terminal and a negative output terminal. The first and second input terminals are respectively connected to the output terminal of the light regulator 102 and the second AC wire N to receive the regulated input voltage Vin. The bridge rectifier 20 converts the regulated input voltage Vin to a DC voltage Vout output from the positive and negative output terminals.

The filter capacitor 30 is connected between the positive and negative output terminals of the bridge rectifier 20.

The current limiting resistor 40 is connected between the positive output terminal of the bridge rectifier 20 and the positive terminal of the LED lamp 1 to limit a current flowing through the LED lamp 1.

The fuse 50 is connected between the output terminal of the light regulator 102 and the positive output terminal of the bridge rectifier 20 to provide an over-current protection.

When the light regulator 102 is adjusted, a regulated input voltage Vin across the resistors R1∼R5 is changed accordingly. Therefore, the DC voltage Vout produced by the bridge rectifier 20 is varied to regulate the brightness of the LED lamp 1 because a current flowing through the LED lamp 1 is proportional to the DC voltage Vout.

In short, the brightness adjusting circuit can be integrated with the original light regulator 102 so that the light regulator 102 is able to control the LED lamp 1.

## Claims

1. A brightness adjusting circuit for an LED lamp, **characterized in that** the brightness adjusting circuit comprises:
a compensating circuit (10) adapted to connect to an output terminal of a light regulator (102) and connected to an AC wire of an AC voltage to output a regulated input voltage;
a bridge rectifier (20) having a first input terminal, a second input terminal, a positive output terminal and a negative output terminal, the first and second input terminals being respectively connected to the output terminal of the light regulator (102) and to the AC wire to convert the regulated input voltage to a DC voltage;
a filter capacitor (30) connected between the positive and negative output terminals of the bridge rectifier (20);
a current limiting resistor (40) connected to the positive output terminal of the bridge rectifier (20) and adapted to connect to the LED lamp (1).

2. The brightness adjusting circuit as claimed in claim 1, wherein the compensating circuit (10) comprises multiple resistors connected in parallel.

3. The brightness adjusting circuit as claimed in claim 1, wherein the multiple resistors of the compensating circuit (10) have the same resistance value.

4. The brightness adjusting circuit as claimed in claim 2, wherein the LED lamp (1) comprises multiple LEDs connected in series.

5. The brightness adjusting circuit as claimed in claim 4, wherein a fuse (50) is further connected between the output terminal of the light regulator (102) and the first input terminal of the bridge rectifier (20).

6. The brightness adjusting circuit as claimed in claim 3, wherein the compensating circuit (10) comprises five resistors connected in parallel.
